(19) **Europäisches Patentamt**

**European Patent Office**

**Office européen des brevets**

(11) Veröffentlichungsnummer: **0 283 714 B1**

(12) # EUROPÄISCHE PATENTSCHRIFT

(45) Veröffentlichungstag der Patentschrift:
22.08.90

(51) Int. Cl.⁵: **B60R 1/08**, F16L 3/22

(21) Anmeldenummer: **88102344.4**

(22) Anmeldetag: **18.02.88**

(54) **Montageeinheit zur Befestigung von Versorgungsleitungen an Kraftfahrzeugen.**

(30) Priorität: **21.02.87 DE 3705626**

(43) Veröffentlichungstag der Anmeldung:
**28.09.88 Patentblatt 88/39**

(45) Bekanntmachung des Hinweises auf die Patenterteilung:
**22.08.90 Patentblatt 90/34**

(84) Benannte Vertragsstaaten:
**DE ES FR GB IT NL SE**

(56) Entgegenhaltungen:
**EP-A- 230 553**
**DE-A- 3 236 981**
**DE-A- 3 236 983**

**Patent Abstracts of Japan, Band 4, Nr. 84 (M-16)
(566) 17. Juni 1980; JP-A-5544084 (NISSAN JIDOSHA
K.K.)**

(73) Patentinhaber: **Firma A. Raymond, Teichstrasse 57,
D-7850 Lörrach(DE)**

(72) Erfinder: **Moretti, Erminio, Rue Clot-Bey Nr. 8,
Grenoble(FR)**

(74) Vertreter: **Kirchgaesser, Johannes, Bahnhofstrasse 3,
D-7859 Efringen-Kirchen(DE)**

## Beschreibung

Die Erfindung bezieht sich auf eine Montageeinheit zur Befestigung von Versorgungsleitungen, wie beispielsweise Kraftstoffleitungen, Bremsleitungen und dergleichen, an Kraftfahrzeugen unter Verwendung der im Oberbegriff des Anspruchs 1 angegebenen Befestigungs- und Haltemittel (z.B. DE-A 3 236 983).

Die Montage der Versorgungsleitungen erfolgt üblicherweise so, daß zunächst die Leitungsnalter auf die Gewindebolzen gedrückt und dann die entsprechend vorgebogenen Leitungsteile von Hand in die Leitungshalter eingedrückt werden. Sodann werden bei Kraftstoffleitungen die Leitungsenden durch sogenannte Kabelschellen mit flexiblen Gummischläuchen verbunden, welche einerseits zum Motor und andererseits zum Tank führen. In gleicher Weise werden auch die Bremsleitungen mittels Kupplungen mit den weiterführenden Anschlußleitungen verbunden. Da dieser Montageablauf viel Zeit und Platz am Montageband erfordert, wäre es aus der Sicht des Autoherstellers wünschenswert, wenn die Kraftstoffleitungen bereits in vormontierten Einheiten angeliefert würden, so daß diese Einheiten nur noch mittels einer automatischen Hebevorrichtung von unten an die Befestigungsstellen angedrückt werden müssen.

Diesem Bedürfnis wird erfindungsgemäß dadurch Rechnung getragen, daß die für den Verlegungsbereich unter der Karosserie abgelängten und ausgerichteten Versorgungsleitungen in Abständen mit den Leitungshaltern verbunden und an ihren Enden mit Einsteckkupplungen zum Anschließen der weiterführenden Verbindungsleitungen bestückt sind.

Voraussetzung für eine problemlose Montage ist die positionsgenaue Ausrichtung der Leitungshalter entsprechend den Abständen zwischen den Gewindebolzen, wobei kleine Toleranzschwankungen ausgeglichen werden müssen. Das positionsgenaue Ausrichten der Leitungshalter kann auf der Montageplatte neben der Bandstraße erfolgen, indem die Leitungshalter in die auf der Montageplatte vorgesehenen Vertiefungen geschoben werden, welche den Positionen der Gewindebolzen genau angepasst sind.

Will man beim Autohersteller auch diesen Montagevorgang des Ausrichtens der Leitungshalter einsparen, so läßt sich das nach einem weiteren Merkmal der Erfindung dadurch erreichen, daß die Leitungshalter auf den Versorgungsleitungen an lagebestimmten Stellen in Längsrichtung unverschiebbar festgelegt werden. Damit wird sichergestellt, daß die beim Hersteller vormontierten Leitungshalter bis zur Auflage auf dem Hebetisch an der Bandstraße die den Gewindebolzen-Abständen entsprechende Lage beibehalten, so daß die Leitungseinheit ohne weitere Einrichtarbeit montiert werden kann.

Zur axialen Festlegung der Leitungshalter auf den Kraftstoff- und Bremsleitungen bieten sich verschiedene Möglichkeiten an.

So können die Leitungshalter beispielsweise durch zusätzliche Klemmfedern oder dergleichen an einer axialen Rutschbewegung gehindert werden. Auch können die Leitungshalter durch Gummieinsätze besonders haftend ausgebildet werden. Ferner besteht die Möglichkeit, die von der Vormontage her benötigte Halteschiene mit positionsgenauer Einbettung der Leitungshalter an der montierten Einheit zu belassen und nach dem Setzen der Versorgungsleitungen wieder dem Lieferanten zukommen zu lassen.

Einige Ausführungsformen der Erfindung sind in der Zeichnung dargestellt und sollen nachfolgend näher erläutert werden.

Es zeigt:

Fig. 1 eine Montageeinheit mit zwei Versorgungsleitungen, Einsteckkupplungen und axial verschiebbaren Leitungshaltern in Unteransicht,

Fig. 2 die Anfangssituation der Montageeinheit mit Schnitt durch die Einsteckkupplungen,

Fig. 3 einen Leitungshalter mit eingesetzten Leitungen im Querschnitt,

Fig. 4 eine andere Ausführungsform der Montageeinheit mit axial festgelegten Leitungshaltern,

Fig. 5 eine weitere Ausführungsform mit axial festgelegten Leitungshaltern,

Fig. 6 - 8 eine schematische Darstellung der Montagefolge,

Fig. 9 ein Leitungshalter beim Aufdrücken auf den Gewindebolzen entsprechend Fig.7 und

Fig. 10 den montierten Leitungshalter entsprechend Fig. 8.

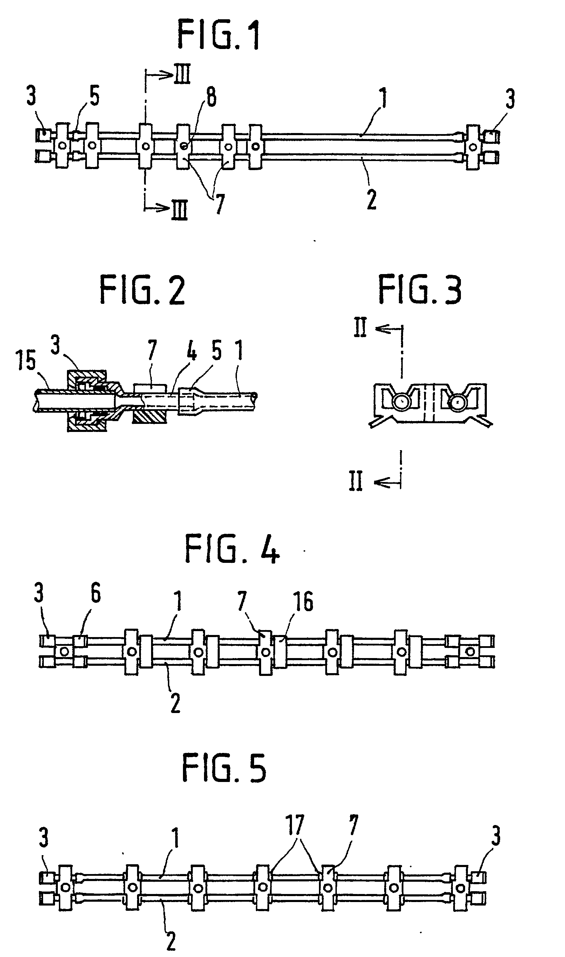

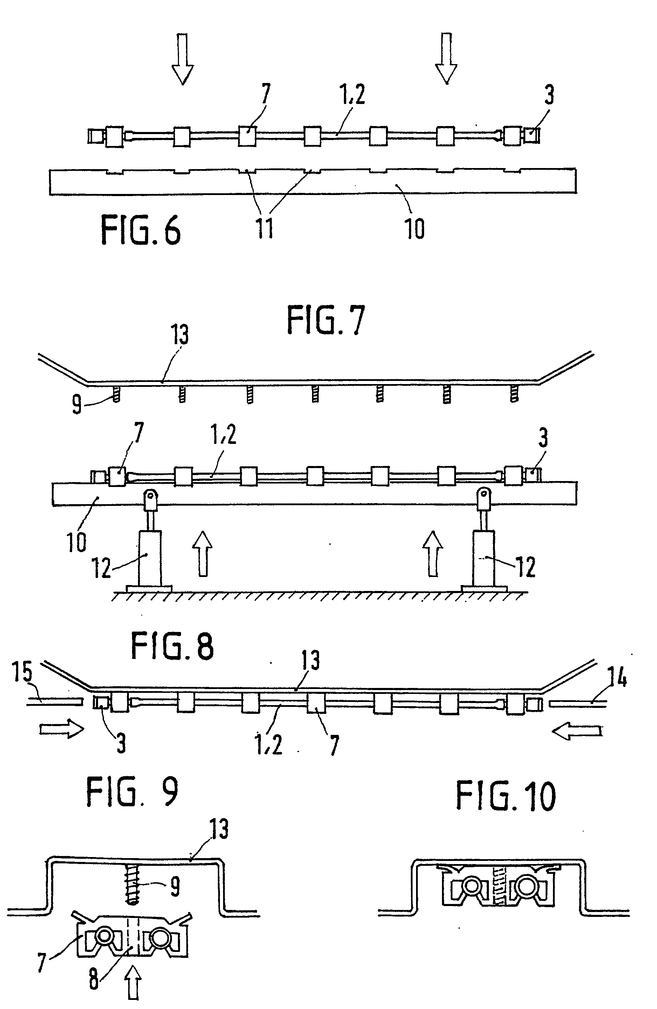

Die in den Figuren dargestellte Montageeinheit besteht im wesentlichen aus zwei Versorgungsleitungen 1 und 2, die vorzugsweise aus Kunststoff hergestellt sind und gleiche oder unterschiedliche Durchmesser aufweisen können. Die Leitungen 1 und 2 sind an ihren Enden mit sogenannten Einsteckkupplungen 3 verbunden, welche dazu bestimmt sind, weiterführende Verbindungsleitungen 14 und 15 anzuschließen (Fig. 8). Die Einsteckkupplungen 3 können hierzu am rückwärtigen Ende mit einem Stutzen 4 verbunden sein, auf welchen die Versorgungsleitung 1, beziehungsweise 2, mit einem etwas erweiterten Endstück 5 aufgesteckt wird (Fig. 1). Ebenso ist es möglich, die Einsteckkupplung 3 an ihrem rückwärtigen Ende mit einer weiteren Einsteckkupplung 6 zu versehen, in welche die Versorgungsleitung 1, beziehungsweise 2, direkt eingesteckt werden kann (Fig. 4).

Die Versorgungsleitungen 1, 2 sind ferner mit einer Vielzahl von bekannten Leitungshaltern 7 untereinander verbunden, welche mit einem integrierten Befestigerteil 8 zum Aufdrücken der Leitungshalter 7 auf sogenannten Steckbolzen 9 versehen sind. Diese können sowohl als T-Bolzen wie auch als Gewindebolzen ausgebildet sein, wobei in der Zeichnung die bevorzugten Gewindebolzen 9 dargestellt sind (Fig. 3, 9 und 10). Befestigerteile zur Aufnahme von Gewindebolzen sind vielfältig bekannt, so z. B. durch EP-A 0 028 323 oder DE-A 3 406 934. Bei dem in Fig. 1 dargestellten Ausführungsbeispiel sitzen die Leitungshalter 7 in unregelmäßigen Abständen auf den Versorgungsleitungen 1 und 2. Lediglich die beiden äußeren Leitungshalter 7 sitzen auf den Stutzen 5 der Einsteckkupplungen 4 an dem Platz, den sie für die spätere Montage auf den Gewindebolzen 9 benötigen. Die Montagefolge für diese Montageeinheit ist in den Figuren 6 bis 10 schematisch dargestellt.

Figur 6 zeigt die Montageeinheit von der Seite, wobei die Leitungshalter 7 bereits in ihre Montageposition verschoben sind. Die Montageeinheit wird mit den ausgerichteten Leitungshaltern 7 auf eine neben dem Montageband befindliche Hubplatte oder -balken 10 abgelegt, wobei für die lagebestimmte Aufnahme der Leitungshalter 7 entsprechende Aussparungen 11 vorgesehen sind. Die Positionierung der Leitungshalter kann selbstverständlich auch durch Stifte oder sonst eine geeignete Art erfolgen.

Sodann wird der vorbereitete Hubbalken 10 an seinen Platz am Montageband gestellt und mittels einer Hubvorrichtung 12 von unten gegen die Fahrzeugkarosserie 13 hochgefahren (Fig. 7 und 9), bis die Leitungshalter 7 mit ihren Befestigungsteilen 8 auf den Gewindebolzen 9 verankert sind (Fig. 8 und 10). Zum Schluß werden Verbindungsleitungen 14 und 15 in Pfeilrichtung in die Kupplungsstücke 3 eingesteckt und die Leitungsmontage ist beendet.

Will man beim Autohersteller den Montagevorgang des Ausrichtens der Leitungshalter auf die Gewindebolzen-Positionen vermeiden, so können die Leitungshalter 7 bereits beim Hersteller an den lagebestimmten Stellen auf den Versorgungsleitungen 1 und 2 unverschiebbar festgelegt werden. Diese Festlegung geschieht in Figur 4 durch Anbringen zusätzlicher Klemmfedern 16, die mit dem Leitungshalter 7 verbunden, oder auf dessen beiden Seiten aufgesteckt sein können.

Eine andere Möglichkeit der axialen Festlegung ist in Figur 5 angedeutet. Dort sind beiderseits der Leitungshalter 7 auf den Versorgungsleitungen 1 und 2 sogenannte Wülste 17 vorgesehen, die entweder vorher bei der Leitungsherstellung werkseitig aufgetragen, oder nach dem Ausrichten der Leitungshalter 7 vom Hersteller der Montageeinheit, beispielsweise durch Andrücken von heißen Stempeln oder dergleichen, erzeugt worden sind. Hierbei empfiehlt es sich, die Wülste 17 so zu setzen, daß eine kleine axiale Verschiebung der Leitungshalter 7 auf den Leitungen 1 und 2 möglich ist, und zwar um einen solchen Betrag, wie er zum Toleranzausgleich zwischen den Gewindebolzen 9 benötigt wird.

## Patentansprüche

1. Montageeinheit zur Befestigung von Versorgungsleitungen (1, 2) an Kraftfahrzeugen unter Verwendung von an der Unterseite der Karosserie (13) befestigter Steckbolzen, insbesondere Gewindebolzen (9), und Leitungshaltern (7) mit einem integrierten Befestigungsteil (8) zum Aufdrücken der Leitungshalter auf die Steckbolzen, dadurch gekennzeichnet, daß die für den Verlegungsbereich unter der Karosserie (13) auf Länge abgeschnittenen und ausgerichteten Versorgungsleitungen (1 u. 2) in Abständen mit den Leitungshaltern (7) verbunden und an ihren Enden mit Einsteckkupplungen (3) zum Anschließen von weiterführenden Verbindungsleitungen (14 u. 15) bestückt sind.

2. Montageeinheit nach Anspruch 1, dadurch gekennzeichnet, daß die Leitungshalter (7) auf den Versorgungsleitungen (1 u. 2) an lagebestimmten Stellen in Längsrichtung unverschiebbar festgelegt sind.

## Claims

1. An assembly unit for fixing supply lines (1, 2) to motor vehicles using push-on pins, in particular screwthreaded pins (9), which are fixed to the underside of the body (13), and line holders (7) with an integrated fixing portion (8) for pressing the line holders on to the push-on pins, characterised in that the supply lines (1 and 2) which are cut to length and adjusted for the region in which they are to be located under the body (13) are connected at spacings to the line holders (7) and are fitted at their ends with push-in couplings (3) for the connection of connecting lines (14 and 15) which extend them.

2. An assembly unit according to claim 1 characterised in that the line holders (7) are fixed on the supply lines (1 and 2) non-displaceably in the longitudinal direction at specific locations.

## Revendications

1. Unité de pose pour la fixation de conduites d'alimentation de fluides (1, 2) dans des véhicules automobiles, par utilisation de tiges d'emmanchement fixées à la partie inférieure de la carrosserie (13), et plus particulièrement de tiges filetées (9) et de supports de canalisations (7) comportant un organe de fixation solidaire (8) pour application par pression des supports de canalisation sur les tiges d'emmanchement, se caractérisant par le fait que les conduites d'alimentation (1 et 2), coupées à la longueur voulue et profilées en fonction des conditions de pose à la partie inférieure de la carrosserie (13) sont munies, à intervalles donnés, de supports de canalisations (7) et au niveau de leurs extrémités de raccords embrochables (3) pour permettre de les raccorder à des canalisations de liaison (14 et 15) desservant d'autres composants.

2. Unité de pose suivant la revendication 1, se caractérisant par le fait que les support de canalisations (7) se trouvent disposés, sur les conduites d'alimentation (1 et 2), à des endroits bien déterminés dans le sens longitudinal de celles-ci, sans qu'il soit possible de les déplacer.

# FIG.1

# FIG.2

# FIG.3

# FIG. 4

# FIG. 5

EP 0 283 714 B1

FIG.6

FIG.7

FIG.8

FIG. 9

FIG.10